# FASCICULE DE BREVET EUROPEEN

(11) **EP 3 366 588 B1**
(45) Date de publication et mention de la délivrance du brevet: **01.04.2020**
(21) Numéro de dépôt: 18157674.5
(22) Date de dépôt: 20.02.2018
(51) Int. Cl.: B64D 13/02, B64D 13/06

(54) **PROCÉDÉ DE VENTILATION D'UN CANAL D'AIR DYNAMIQUE ET DISPOSITIF DE CONTRÔLE ENVIRONNEMENTAL ET VÉHICULE METTANT EN OEUVRE CE PROCÉDÉ**
VENTILATIONSVERFAHREN EINER DYNAMISCHEN LUFTLEITUNG, UND UMWELTKONTROLLVORRICHTUNG SOWIE FAHRZEUG, IN DEM DIESES VERFAHREN UMGESETZT WIRD
METHOD FOR VENTILATING A DYNAMIC AIR CHANNEL AND ENVIRONMENTAL CONTROL DEVICE AND VEHICLE USING SAID METHOD

(30) Priorité: 23.02.2017 FR 1751443
(43) Date de publication de la demande: 29.08.2018
(73) Titulaire: Liebherr-Aerospace Toulouse SAS, 31200 Toulouse (FR)
(72) Inventeur: BOMBLED, Cécile, 31780 CASTELGINEST (FR); SANCHEZ, Frédéric, 31620 LABASTIDE-SAINT-SERNIN (FR)
(74) Mandataire: Cabinet BARRE LAFORGUE & associés

(56) Documents cités:
- EP-A1- 2 062 818
- US-A- 2 870 698
- US-A- 3 842 720
- US-A1- 2007 113 579
- US-B2- 7 797 962

## Description

L'invention concerne un procédé de ventilation d'un canal d'air dynamique de véhicule, et en particulier d'aéronef. Elle s'étend à un dispositif de contrôle environnemental d'au moins une cabine de véhicule -notamment d'aéronef-dans lequel un tel procédé de ventilation est mis en œuvre. Elle s'étend également à un véhicule -notamment à un aéronef- doté d'un dispositif de contrôle environnemental selon l'invention.

Dans tout le texte, le terme « cabine » désigne tout espace intérieur de véhicule -notamment d'aéronef- dans lequel la pression et/ou la température de l'air doivent être contrôlées. Il peut donc s'agir aussi bien d'une cabine pour passagers, que d'un cockpit, une soute, un espace de chargement de fret... L'expression « contrôle environnemental » désigne le fait de contrôler la température et/ou la pression et/ou l'hygrométrie et/ou la composition (qualité) de l'air dans une cabine.

En outre, l'expression « source d'air comprimé » désigne tout dispositif apte à générer un flux d'air à pression supérieure à la pression statique ambiante (c'est-à-dire la pression atmosphérique), indépendamment du déplacement du véhicule. En particulier, le terme « compresseur » désigne tout dispositif apte à convertir de l'énergie mécanique en énergie pneumatique, c'est-à-dire en air comprimé ; ce terme désigne donc en particulier aussi bien une machine (notamment une machine tournante à circulation radiale ou axiale, ou une machine à piston(s)) délivrant de l'air comprimé, qu'une partie de machine, par exemple un étage de compression ou une roue de compression, d'une machine délivrant de l'air comprimé. Par exemple plusieurs étages ou roues de compression d'une même machine délivrant de l'air comprimé constituent plusieurs sources d'air comprimé.

Les cabines de véhicules sont le plus souvent dotées d'au moins un dispositif de contrôle environnemental. Les véhicules se déplaçant à relativement haute vitesse tels que les aéronefs ou les trains à grande vitesse sont dotés d'au moins un canal d'air dynamique permettant de recevoir de l'air à pression dynamique sous l'effet du déplacement du véhicule, et d'alimenter au moins un échangeur de chaleur placé dans le canal d'air dynamique, et associé à un dispositif de contrôle environnemental. Un tel échangeur de chaleur peut être par exemple un échangeur intermédiaire (c'est-à-dire interposé entre le compresseur et la turbine) d'un turbocompresseur de refroidissement à cycle à air (doté ou non d'un moteur électrique d'entraînement) ; un échangeur de refroidissement entre plusieurs compresseurs -notamment entre un premier compresseur à moteur électrique et un compresseur d'un turbocompresseur de refroidissement à cycle à air- (doté ou non d'un moteur électrique d'entraînement) ; un échangeur de pré-refroidissement d'air prélevé sur un compresseur de turboréacteur ; tout autre échangeur de chaleur pour le refroidissement d'un fluide autre que l'air (réfrigérant, carburant,...)...

Le problème général qui se pose avec de tels dispositifs est celui de la ventilation d'un tel canal d'air dynamique lorsque la vitesse du véhicule est insuffisante, notamment lorsqu'il est à l'arrêt, ou, dans le cas d'un aéronef, au roulage au sol. En effet, les besoins en refroidissement de l'air de cabine peuvent être importants dans ces conditions, et donc nécessiter un fonctionnement optimal du dispositif de contrôle environnemental, et en particulier de chaque échangeur de chaleur interposé dans chaque canal d'air dynamique.

US 7797962 décrit en particulier un procédé de ventilation d'un tel canal d'air dynamique dans lequel une trompe d'injection (en anglais « jet pump ») est placée dans le canal d'air dynamique à l'aval de l'échangeur, cette trompe d'injection étant alimentée en air comprimé via des vannes de régulation à partir d'une partie du flux d'air délivré par le compresseur d'un turbocompresseur motorisé à cycle à air et/ou à partir d'un flux d'air délivré par une deuxième source d'air comprimé telle qu'un deuxième compresseur motorisé ou de l'air de prélèvement sur un compresseur d'un turboréacteur de l'aéronef.

Avec un tel procédé et un tel dispositif la trompe d'injection doit pouvoir fonctionner avec l'une et/ou l'autre des sources d'air comprimé, y compris dans des régimes transitoires lorsque l'une ou l'autre de ces sources d'air comprimé est interrompue ou présente un dysfonctionnement. La trompe d'injection doit donc pouvoir fonctionner dans une large gamme de pressions et de débits d'entrée. Or, si une telle trompe d'injection peut être optimisée pour un point de fonctionnement, ses performances se dégradent en général de façon importante lorsque la pression et/ou le débit à l'entrée varie(nt) par rapport à ce point de fonctionnement. Il est aussi à noter à ce titre que la trompe d'injection d'un canal d'air dynamique doit par ailleurs être particulièrement peu volumineuse pour ne pas gêner elle-même la circulation du flux d'air dans le canal, et de masse aussi faible que possible pour ne pas grêver le poids du véhicule. Ces contraintes augmentent d'autant le problème d'optimisation du point de fonctionnement, qui est d'autant plus délicat que la trompe d'injection est de dimensions et/ou de masse réduite(s). En outre, un fonctionnement dégradé de la trompe d'injection entraîne, non seulement une ventilation insuffisante du canal d'air dynamique, mais également un bruit très important pouvant être une gêne considérable dans l'environnement du véhicule ou pour les passagers du véhicule, notamment dans le cas d'un avion de ligne ou d'un train.

Par ailleurs, lorsque plusieurs compresseurs rotatifs sont reliés à une même trompe d'injection, le risque existe qu'un dysfonctionnement (tel que le pompage) d'un compresseur se répercute de façon intempestive sur le fonctionnement d'un autre compresseur via la trompe d'injection. Pour éviter cela, il est nécessaire de prévoir des dispositions spécifiques de commande des vannes d'alimentation de la trompe d'injection, ce qui complexifie le système.

L'invention vise donc de façon générale à pallier ces inconvénients en proposant un procédé de ventilation d'un canal d'air dynamique grâce auquel chaque trompe d'injection peut être alimentée à partir de l'une et/ou l'autre d'une pluralité de sources d'air comprimé du véhicule tout en ayant un fonctionnement optimal -notamment avec des performances de ventilation améliorées et une réduction du bruit acoustique généré par la trompe d'injection- dans une large plage de pressions d'entrée et de débits d'entrée.

L'invention vise également à obtenir ces résultats avec une masse et un encombrement réduits, compatibles avec les contraintes de l'intégration de la trompe d'injection dans un canal d'air dynamique.

L'invention vise également à simplifier la gestion de l'alimentation de chaque trompe d'injection d'un canal d'air dynamique à partir de différentes sources d'air comprimé, tout en évitant toute interférence intempestive de plusieurs sources d'air comprimé entre elles via une trompe d'injection, en particulier lorsqu'au moins l'une de ces sources d'air comprimé est un compresseur rotatif.

L'invention vise également à proposer un dispositif de contrôle environnemental de cabine de véhicule -notamment d'aéronef- présentant les mêmes avantages.

L'invention concerne donc un procédé de ventilation d'un canal d'air dynamique de véhicule -notamment d'aéronef-, ledit canal d'air dynamique comprenant :
- une entrée d'air dynamique apte à recevoir un flux d'air à pression dynamique sous l'effet d'un déplacement du véhicule,
- au moins un échangeur de chaleur agencé pour pouvoir recevoir au moins une partie dudit flux d'air dynamique,
procédé dans lequel on équipe le canal d'air dynamique d'au moins une trompe d'injection agencée pour pouvoir être alimentée en air comprimé délivré par des sources d'air comprimé du véhicule,
caractérisé en ce que la trompe d'injection est une trompe d'injection multiple :
- comprenant une pluralité d'entrées d'air comprimé et une pluralité de buses de sortie d'air comprimé, chaque buse de sortie étant reliée à au moins l'une desdites entrées d'air comprimé,
- dont lesdites entrées d'air comprimé sont reliées à une pluralité de sources (distinctes) d'air comprimé du véhicule,
- dont une première buse de sortie est reliée à au moins une première entrée d'air comprimé reliée à au moins une première source d'air comprimé du véhicule, cette première buse de sortie pouvant recevoir de l'air comprimé délivré par au moins une telle première source d'air comprimé du véhicule,
- dont au moins une buse de sortie, dite deuxième buse de sortie, distincte de ladite première buse de sortie, est :
   ∘ isolée de chaque première entrée d'air comprimé,
   ∘ reliée à au moins une entrée, dite deuxième entrée d'air comprimé :
      ▪ cette deuxième entrée d'air comprimé étant distincte de chaque première entrée d'air comprimé,
      ▪ et étant reliée à au moins une source d'air comprimé du véhicule, dite deuxième source d'air comprimé, distincte de chaque première source d'air comprimé,
         chaque deuxième buse de sortie pouvant recevoir de l'air comprimé délivré par au moins une telle deuxième source d'air comprimé, sans pouvoir recevoir de l'air comprimé délivré par toute première source d'air comprimé (c'est-à-dire par toute source d'air comprimé reliée à une première entrée d'air comprimé reliée à ladite première buse de sortie).

L'invention s'étend à un dispositif de contrôle environnemental d'au moins une cabine de véhicule -notamment d'aéronef- dans lequel un procédé selon l'invention de ventilation d'au moins canal d'air dynamique est mis en œuvre. L'invention s'étend donc à un dispositif de contrôle environnemental d'au moins une cabine de véhicule -notamment d'aéronef- comprenant :
- une pluralité de sources d'air comprimé,
- au moins un canal d'air dynamique comprenant :
   ∘ une entrée d'air dynamique apte à recevoir un flux d'air à pression dynamique sous l'effet d'un déplacement du véhicule,
   ∘ au moins un échangeur de chaleur agencé pour pouvoir recevoir au moins une partie dudit flux d'air dynamique,
   ∘ au moins une trompe d'injection agencée pour pouvoir être alimentée en air comprimé délivré par au moins une partie desdites sources d'air comprimé,
   caractérisé en ce que la trompe d'injection est une trompe d'injection multiple :
   - comprenant une pluralité d'entrées d'air comprimé et une pluralité de buses de sortie d'air comprimé, chaque buse de sortie étant reliée à au moins l'une desdites entrées d'air comprimé,
   - dont lesdites entrées d'air comprimé sont reliées à une pluralité desdites sources d'air comprimé,
   - dont une première buse de sortie est reliée à au moins une première entrée d'air comprimé reliée à au moins une première source d'air comprimé, cette première buse de sortie pouvant recevoir de l'air comprimé délivré par au moins une telle première source d'air comprimé,
   - dont au moins une buse de sortie, dite deuxième buse de sortie, distincte de ladite première buse de sortie, est :
      ∘ isolée de chaque première entrée d'air comprimé,
      ∘ reliée à au moins une entrée, dite deuxième entrée d'air comprimé :
         ▪ cette deuxième entrée d'air comprimé étant distincte de chaque première entrée d'air comprimé,
         ▪ et étant reliée à au moins une source d'air comprimé, dite deuxième source d'air comprimé, distincte de chaque première source d'air comprimé, chaque deuxième buse de sortie pouvant recevoir de l'air comprimé délivré par au moins une telle deuxième source d'air comprimé, sans pouvoir recevoir de l'air comprimé délivré par toute première source d'air comprimé (c'est-à-dire par toute source d'air comprimé reliée à une première entrée d'air comprimé reliée à ladite première buse de sortie).

L'invention s'étend également à un procédé de ventilation d'un canal d'air dynamique mis en œuvre dans un dispositif selon l'invention de contrôle environnemental d'au moins une cabine de véhicule -notamment d'aéronef-.

En particulier, dans un procédé et un dispositif selon l'invention, une première entrée d'air comprimé d'une même trompe d'injection multiple est reliée à au moins une première source d'air comprimé du véhicule pour pouvoir recevoir de l'air comprimé délivré par au moins une telle première source d'air comprimé du véhicule ; et une deuxième entrée d'air comprimé de cette même trompe d'injection multiple, distincte de ladite première entrée d'air comprimé, est reliée à au moins une deuxième source d'air comprimé du véhicule, distincte de chaque première source d'air comprimé du véhicule, pour pouvoir recevoir de l'air comprimé délivré par au moins une telle deuxième source d'air comprimé du véhicule. Chaque buse reliée à une telle deuxième entrée d'air comprimé n'est pas reliée à ladite première entrée d'air comprimé.

Alors que le fait d'alimenter indépendamment plusieurs buses différentes, et en particulier plusieurs entrées d'air comprimé différentes, d'une même trompe d'injection multiple d'un canal d'air dynamique pouvait être considéré de prime abord comme pénalisant -notamment du fait qu'une telle alimentation suppose plusieurs conduites distinctes pour relier indépendamment chaque entrée d'air comprimé de la trompe d'injection multiple à l'une au moins des sources d'air comprimé du véhicule-, les inventeurs ont constaté au contraire que l'utilisation d'une trompe d'injection multiple à plusieurs entrées et plusieurs buses de sortie indépendantes reliées indépendamment à des sources d'air comprimé distinctes permet en réalité un gain considérable tant sur les performances aérodynamiques et acoustiques de la trompe, que sur la masse et l'encombrement général du dispositif, et également une simplification importante de la gestion des différentes sources d'air comprimé, notamment dans le cas de compresseurs rotatifs susceptibles de pompage.

Un même canal d'air dynamique est équipé d'au moins une trompe d'injection multiple, mais peut comporter plusieurs trompes d'injection, par exemple une trompe d'injection multiple ou plusieurs trompes d'injection multiple ; une trompe d'injection simple (c'est-à-dire dotée d'une seule buse) ou plusieurs trompes d'injection simple. Néanmoins, dans certains modes de réalisation préférentiels selon l'invention, un même canal d'air dynamique est équipé d'une et une seule trompe d'injection, qui est une trompe d'injection multiple conformément à l'invention.

De préférence, dans un même canal d'air dynamique, au moins une trompe d'injection multiple selon l'invention est agencée à l'aval d'au moins un -notamment de chaque- échangeur de chaleur du canal d'air dynamique. En effet, en général, chaque échangeur de chaleur d'un tel canal d'air dynamique est utilisé pour le refroidissement d'un fluide (notamment de l'air à destination d'au moins une cabine) à partir d'air à pression dynamique circulant dans le canal d'air dynamique. Il est donc préférable que l'air comprimé injecté dans le canal d'air dynamique par une telle trompe d'injection, qui est à relativement haute température, ne le soit qu'à l'aval d'un tel échangeur de refroidissement. Cela étant, rien n'empêche de prévoir, dans certaines applications, au moins une trompe d'injection, y compris une trompe d'injection multiple, à l'amont d'au moins un échangeur du canal d'air dynamique.

De même, un dispositif de contrôle environnemental selon l'invention peut comporter plusieurs canaux d'air dynamique. Néanmoins, dans certains modes de réalisation préférentiels selon l'invention, le dispositif de contrôle environnemental selon l'invention comporte un unique canal d'air dynamique.

Dans un procédé et un dispositif selon l'invention, chaque deuxième buse étant distincte de ladite première buse, n'est pas reliée à chaque première entrée d'air comprimé, c'est-à-dire à chaque entrée d'air comprimé reliée à cette première buse. Ainsi, chaque deuxième buse peut être alimentée en air comprimé à partir d'au moins une deuxième source d'air comprimé qui n'est pas une première source d'air comprimé alimentant ladite première buse. Cette condition implique une séparation d'alimentation pneumatique d'au moins deux buses distinctes à partir d'au moins deux sources d'air comprimé distinctes, mais n'empêche pas de prévoir qu'au moins une buse -voire que chaque buse- d'une trompe d'injection multiple soit agencée pour pouvoir recevoir de l'air comprimé en provenance de plusieurs sources d'air comprimé du véhicule. Ainsi, par exemple, ladite première buse peut être reliée à plusieurs premières sources d'air comprimé distinctes. De même, chaque deuxième buse peut être reliée à plusieurs deuxièmes sources d'air comprimé distinctes, aucune d'entre elles constituant une première source d'air comprimé (reliée à ladite première buse). Cela étant, dans certains modes de réalisation avantageux de l'invention, chaque buse d'au moins une trompe d'injection multiple -notamment de chaque trompe d'injection multiple- est reliée à une unique source d'air comprimé, c'est-à-dire peut recevoir de l'air comprimé en provenance uniquement d'une et une seule source d'air comprimé.

L'invention s'applique avec des sources d'air comprimé disponibles à bord du véhicule qui peuvent être de toute nature (prélèvement d'air comprimé sur un étage de compression d'un turboréacteur, compresseur rotatif d'un turbocompresseur doté ou non d'un moteur électrique, cabine pressurisée, flux d'air de ventilation ou de refroidissement de composants du véhicule...). Chacune des sources d'air comprimé est apte à délivrer de l'air comprimé indépendamment du déplacement du véhicule, c'est-à-dire y compris lorsque le véhicule se déplace à basse vitesse ou est à l' arrêt.

Dans certains modes de réalisation avantageux conformes à l'invention l'une au moins -notamment chacune- desdites sources d'air comprimé reliées à une même trompe d'injection multiple d'un canal d'air dynamique est un compresseur -notamment un compresseur rotatif, en particulier un compresseur rotatif entraîné au moins par un moteur électrique (uniquement par un tel moteur électrique et/ou éventuellement par un autre dispositif d'entraînement tel qu'une turbine)- d'un dispositif de contrôle environnemental d'au moins une cabine du véhicule. En particulier, avantageusement et selon l'invention, au moins l'une desdites première et deuxième sources d'air comprimé est un compresseur rotatif d'un dispositif de contrôle environnemental d'au moins une cabine du véhicule. Ainsi, au moins un compresseur rotatif d'un dispositif de contrôle environnemental d'au moins une cabine du véhicule est relié à au moins une entrée d'une trompe d'injection multiple.

Dans ces modes de réalisation, avantageusement et selon l'invention, chaque buse d'une même trompe d'injection -notamment d'une même trompe d'injection multiple- d'un canal d'air dynamique est reliée à au plus un compresseur rotatif. Ainsi, si une buse est reliée à un compresseur rotatif et à une autre source d'air comprimé, cette autre source d'air comprimé n'est pas un compresseur rotatif du véhicule. Plus particulièrement, avantageusement et selon l'invention, une même buse d'une trompe d'injection -notamment d'une trompe d'injection multiple-reliée à un compresseur rotatif du véhicule est reliée uniquement à ce compresseur rotatif, à l'exclusion de toute autre source d'air comprimé du véhicule. Ainsi, si le véhicule comporte plusieurs compresseurs rotatifs, deux compresseurs rotatifs distincts du véhicule ne sont pas reliés à une même buse d'une même trompe d'injection -notamment à une même buse d'une même trompe d'injection multiple-. De la sorte, on évite tout couplage et toute interférence entre deux compresseurs rotatifs via une buse d'une trompe d'injection, en particulier en cas de pompage d'un compresseur rotatif.

Réciproquement, rien n'empêche de prévoir qu'au moins une -notamment que chaque- source d'air comprimé du véhicule soit reliée à plusieurs buses d'une même trompe d'injection multiple. Par exemple, une deuxième source d'air comprimé du véhicule peut être reliée à plusieurs deuxièmes buses d'une même trompe d'injection multiple. En particulier, un même compresseur rotatif -notamment un même compresseur rotatif entraîné par un moteur électrique- du véhicule peut être relié à plusieurs buses d'une même trompe d'injection multiple.

Également, rien n'empêche de prévoir qu'au moins une buse -voire que chaque buse- d'une trompe d'injection multiple soit reliée à plusieurs entrées d'air comprimé distinctes de la trompe d'injection multiple. Ainsi, par exemple, la première buse peut être reliée à plusieurs premières entrées d'air comprimé distinctes. De même, la deuxième buse peut être reliée à plusieurs deuxièmes entrées d'air comprimé distinctes, aucune d'entre elles constituant une première entrée d'air comprimé, c'est-à-dire étant reliée à la première buse. Cela étant, dans certains modes de réalisation avantageux de l'invention, chaque buse d'au moins une trompe d'injection multiple -notamment de chaque trompe d'injection multiple- est reliée à une unique entrée d'air comprimé de cette trompe d'injection multiple, c'est-à-dire peut recevoir de l'air comprimé en provenance uniquement d'une et une seule entrée d'air comprimé.

Par ailleurs, rien n'empêche de prévoir qu'au moins une -notamment que chaque- entrée d'air comprimé d'au moins une -notamment de chaque- trompe d'injection multiple soit reliée à plusieurs sources d'air comprimé du véhicule.

Cela étant, dans certains modes de réalisation avantageux de l'invention, chaque entrée d'air comprimé d'au moins une -notamment de chaque-trompe d'injection multiple est reliée à au plus un compresseur rotatif du véhicule. Ainsi, si une entrée d'air comprimé est reliée à un compresseur rotatif et à une autre source d'air comprimé, cette autre source d'air comprimé n'est pas un compresseur rotatif. Plus particulièrement, avantageusement et selon l'invention, toute entrée d'air comprimé d'une trompe d'injection -notamment d'une trompe d'injection multiple-reliée à un compresseur rotatif du véhicule est reliée uniquement à ce compresseur rotatif, à l'exclusion de toute autre source d'air comprimé du véhicule. Ainsi, si le véhicule comporte plusieurs compresseurs rotatifs, deux compresseurs rotatifs distincts du véhicule ne sont pas reliés à une même entrée d'air comprimé d'une même trompe d'injection -notamment à une même buse d'une même trompe d'injection multiple-. De la sorte, on évite tout couplage et toute interférence entre deux compresseurs rotatifs via une entrée d'air comprimé d'une trompe d'injection, en particulier en cas de pompage d'un compresseur rotatif.

Dans certains modes de réalisation particuliers de l'invention chaque entrée d'air comprimé d'au moins une -notamment de chaque- trompe d'injection multiple est reliée à une unique source d'air comprimé -notamment à un unique compresseur rotatif- du véhicule, chaque entrée d'air comprimé et chaque buse de cette trompe d'injection multiple pouvant uniquement recevoir de l'air comprimé délivré par une unique source d'air comprimé -notamment par un unique compresseur rotatif- du véhicule.

En outre, rien n'empêche de prévoir réciproquement qu'au moins une même source d'air comprimé du véhicule soit reliée à plusieurs entrées d'air comprimé d'une même trompe d'injection multiple, ou de plusieurs trompes d'injection (multiple ou simple) du même canal d'air dynamique, ou de plusieurs canaux d'air dynamique du véhicule. En particulier, plusieurs entrées d'air comprimé d'une même trompe d'injection multiple peuvent être reliées à une même source d'air comprimé du véhicule.

Cela étant, dans certains modes de réalisation avantageux de l'invention, chaque source d'air comprimé du véhicule reliée à au moins une trompe d'injection multiple d'au moins un -notamment de chaque- canal d'air dynamique est reliée à une unique entrée d'air comprimé de cette trompe d'injection multiple. Autrement dit, chaque source d'air comprimé du véhicule est reliée à une unique entrée d'air comprimé de chaque trompe d'injection multiple qu'elle alimente en air comprimé. Et les différentes entrées d'air comprimé d'une même trompe d'injection multiple sont reliées indépendamment les unes des autres à différentes sources d'air comprimé du véhicule, chaque entrée d'air comprimé étant reliée à une source d'air comprimé du véhicule qui lui est propre, deux entrées d'air comprimé distinctes d'une même trompe d'injection multiple étant reliées à deux sources comprimées du véhicule distinctes, respectivement.

De préférence, pour un même canal d'air dynamique, chaque source d'air comprimé -notamment chaque compresseur rotatif- du véhicule est reliée à une seule trompe d'injection -notamment à une seule entrée d'air comprimé d'une seule trompe d'injection multiple- de ce canal d'air dynamique.

Dans un procédé et un dispositif selon l'invention, une même entrée d'air comprimé d'une trompe d'injection multiple peut être reliée à une seule buse de cette trompe d'injection multiple, ou au contraire à plusieurs buses de cette trompe d'injection multiple.

L'invention s'applique en particulier avantageusement à un aéronef comprenant un dispositif de contrôle environnemental doté de plusieurs compresseurs rotatifs entraînés chacun au moins par un moteur électrique. Dans cette application particulière, avantageusement et selon l'invention les entrées d'air comprimé d'une même trompe d'injection multiple d'un même canal d'air dynamique sont reliées à une pluralité de tels compresseurs rotatifs distincts, chaque entrée d'air comprimé de la trompe étant uniquement reliée à un unique compresseur rotatif pour pouvoir recevoir uniquement de l'air comprimé délivré par ce compresseur rotatif. En particulier, l'invention permet de délester l'un et/ou l'autre des compresseurs rotatifs d'un dispositif de contrôle environnemental d'au moins une cabine d'aéronef, et par exemple d'éviter le pompage d'un compresseur rotatif. En outre, en cas de pompage d'un compresseur rotatif, il n'y a pas de risques que ce pompage procure un dysfonctionnement d'une autre source d'air comprimé, notamment un autre compresseur.

Par ailleurs, une trompe d'injection multiple d'un dispositif selon l'invention peut faire l'objet de diverses variantes de réalisation structurelle. Dans certains modes de réalisation avantageux et conformes à l'invention la trompe d'injection présente au moins une première buse centrale reliée à une première entrée d'air comprimé et au moins une série de buses, dites deuxièmes buses périphériques, reliées à une deuxième entrée d'air comprimé et s'étendant autour de chaque première buse centrale.

Ainsi, les différentes buses peuvent être avantageusement agencées de façon à délivrer l'air comprimé selon une même direction générale d'injection, et en particulier en étant agencées selon des cercles concentriques, une pluralité de buses agencées selon un même cercle étant reliées à une même entrée d'air comprimé de la trompe. Une telle disposition facilite le mélange des différents flux d'air comprimé lorsque les différentes entrées d'air comprimé sont alimentées, et uniformise le comportement de la trompe d'injection quelle(s) que soi(en)t l'une et/ou l'autre des entrées d'air comprimé qui est(sont) alimentée(s). Il en résulte des performances aérodynamiques et acoustiques de la trompe d'injection qui peuvent alors être optimisées.

Dans certains modes de réalisation avantageux d'un procédé et d'un dispositif selon l'invention, une trompe d'injection multiple comprend un nombre de buses de sortie compris entre trois et huit, en particulier avantageusement une première buse de sortie centrale et trois à six deuxièmes buses périphériques. Dans un mode de réalisation préférentiel, une trompe d'injection multiple comprend quatre deuxièmes buses périphériques.

En outre, dans certains modes de réalisation avantageux de l'invention la trompe d'injection comprend :
- un plenum de sortie agencé pour pouvoir recevoir l'air comprimé délivré par chaque buse,
- une entrée d'air, dite entrée d'air à basse pression, agencée pour recevoir de l'air en provenance de l'entrée d'air dynamique du canal d'air dynamique et le faire circuler dans ledit plenum,
- lesdites buses et ladite entrée d'air à basse pression étant agencées de façon à ce que l'air comprimé issu de l'une quelconque des buses puisse se mélanger dans ledit plenum à l'air délivré par ladite entrée d'air basse pression en formant un flux d'air de mélange entraînant une ventilation du canal d'air dynamique. De préférence, ladite entrée d'air à basse pression et le plenum sont interposés en série dans le canal d'air dynamique, l'entrée d'air à basse pression recevant l'intégralité du flux d'air traversant le canal d'air dynamique.

Par ailleurs, l'agencement de l'entrée d'air à basse pression dans la trompe d'injection peut faire l'objet de différentes variantes de réalisation. Ainsi, rien n'empêche de prévoir que l'entrée d'air à basse pression soit une entrée d'air axiale, coaxiale aux buses de sortie d'air comprimé. Cela étant, dans certains modes de réalisation avantageux, ladite entrée d'air à basse pression est une entrée d'air radiale aux buses de la trompe d'injection. Une telle entrée d'air à basse pression radiale délivre l'air à basse pression dans le plenum selon une direction radiale de l'extérieur vers l'intérieur par rapport à la direction générale d'injection définie par les buses.

Également dans certains modes de réalisation avantageux, ledit plenum est en forme de tube de Venturi, c'est-à-dire présente un col (zone de plus faible section du plénum, considérée indépendamment des buses), les buses sont agencées pour pouvoir délivrer de l'air comprimé au col ou à l'amont du col, et ladite entrée d'air à basse pression est agencée pour alimenter le plenum à l'amont du col. La section du plenum à l'amont du col est de préférence supérieure à celle du col, c'est-à-dire constitue un tronçon convergent jusqu'au col. La section du plenum à l'aval du col est de préférence également supérieure à celle du col et constitue un tronçon divergent à partir du col.

Par ailleurs, dans certains modes de réalisation avantageux conformes à l'invention le canal d'air dynamique est doté d'une conduite de contournement de la trompe d'injection, cette conduite de contournement reliant une zone du canal d'air dynamique à l'amont de ladite entrée d'air à basse pression de la trompe d'injection audit plenum. En outre, avantageusement et selon l'invention ladite conduite de contournement est dotée d'un clapet adapté pour :
- permettre une circulation d'air dans la conduite de contournement lorsqu'aucune des entrées d'air comprimé de la trompe d'injection n'est alimentée en air comprimé,
- permettre une circulation d'air dans l'entrée d'air à basse pression de la trompe d'injection lorsque l'une au moins des entrées d'air comprimé de la trompe d'injection est alimentée en air comprimé. Ainsi, la trompe d'injection ne gêne pas la circulation d'air dynamique dans le canal d'air dynamique lorsque le véhicule est en déplacement à vitesse suffisante, mais permet une ventilation appropriée du canal d'air dynamique lorsque la trompe d'injection est alimentée en air comprimé, le véhicule n'étant pas en déplacement à vitesse suffisante.

En général, un canal d'air dynamique d'un véhicule présente également une sortie de l'air vers l'atmosphère extérieure au véhicule après avoir traversé le canal d'air dynamique. En conséquence, avantageusement et selon l'invention, lesdites buses de la trompe d'injection délivrent de l'air comprimé en direction d'une telle sortie d'air du canal d'air dynamique dans l'atmosphère extérieure au véhicule. De même, ledit plenum communique avec une sortie d'air du canal d'air dynamique vers l'atmosphère extérieure au véhicule, ou forme une telle sortie d'air du canal d'air dynamique. L'invention s'applique cependant également dans les modes de réalisation où le canal d'air dynamique présente une sortie d'air qui ne communique pas avec l'atmosphère extérieure au véhicule.

L'invention permet ainsi de ventiler un canal d'air dynamique, c'est-à-dire de générer un débit d'air dans le canal d'air dynamique indépendamment du déplacement du véhicule, de manière redondante par plusieurs sources d'air comprimé. Il est ainsi possible en particulier de délester l'une et/ou l'autre source d'air comprimé en tant que de besoin tout en maintenant la fonction de ventilation du canal d'air dynamique. Également, l'invention permet d'optimiser les performances aérodynamiques et acoustiques de la trompe d'injection, cette trompe d'injection pouvant être adaptée et optimisée pour les différentes sources d'air comprimé du véhicule. En particulier, chaque entrée d'air comprimé et chaque buse de sortie peut être spécifiquement adaptée et optimisée aux caractéristiques de l'air comprimé délivré par la source d'air comprimé à laquelle cette entrée d'air comprimé est reliée. En outre, comparativement à une trompe d'injection simple, pour un même effet de ventilation, la pression d'injection en sortie de buses peut être réduite, et le brassage d'air dans le canal d'air dynamique est amélioré. La performance aérodynamique de la trompe d'injection multiple peut être maintenue intégralement en cas de dysfonctionnement de l'une des sources d'air comprimé, par exemple en cas de pompage d'un compresseur rotatif, en alimentant la trompe d'injection multiple à partir d'une autre source d'air comprimé.

L'invention s'étend à un véhicule -notamment à un aéronef-caractérisé en ce qu'il comprend au moins un dispositif de contrôle environnemental selon l'invention et/ou dans lequel un procédé de ventilation selon l'invention d'au moins un canal d'air dynamique est mis en œuvre.

L'invention concerne également un procédé de ventilation, un dispositif de contrôle environnemental d'au moins une cabine de véhicule -notamment d'aéronef-, et un véhicule -notamment un aéronef- caractérisés en combinaison par tout ou partie des caractéristiques mentionnées ci-dessus ou ci-après.

D'autres buts, caractéristiques et avantages de l'invention apparaîtront à la lecture de la description suivante donnée à titre non limitatif et qui se réfère aux figures annexées dans lesquelles :
- la figure 1 est un schéma général d'un exemple de dispositif de contrôle environnemental d'aéronef selon un mode de réalisation de l'invention, dans lequel un procédé de ventilation selon l'invention d'un canal d'air dynamique est mis en œuvre,
- les figures 2 et 3 sont des vues schématiques en perspective, et, respectivement en coupe axiale, illustrant un exemple de réalisation des buses d'une trompe d'injection d'un dispositif de contrôle environnemental selon l'invention mettant en œuvre un procédé de ventilation selon l'invention,
- la figure 4 est une vue schématique en élévation d'un exemple de réalisation d'un tronçon de sortie d'un canal d'air dynamique d'un dispositif de contrôle environnemental selon l'invention comprenant une trompe d'injection pour la mise en œuvre d'un procédé de ventilation selon l'invention,
- la figure 5 est une vue schématique en coupe axiale selon la ligne V-V de la figure 4.

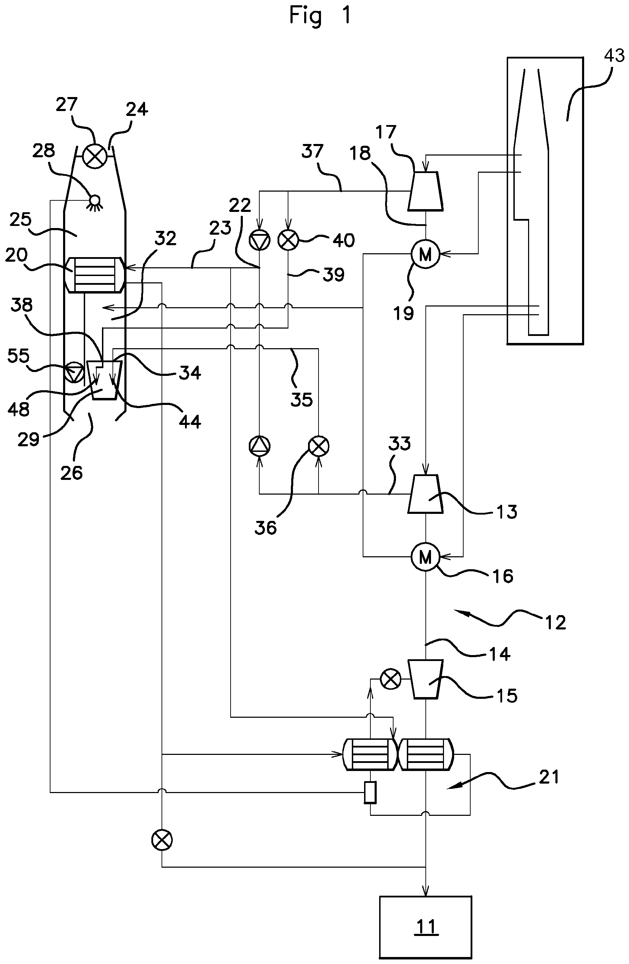

La figure 1 représente un exemple de dispositif de contrôle environnemental selon l'invention d'une cabine 11 d'aéronef. Ce dispositif de contrôle environnemental est du type à cycle à air, et comprend :
- une machine 12 à cycle à air motorisée comportant un premier compresseur 13 rotatif entraîné par un arbre 14 sur lequel sont accouplés une turbine 15 et un moteur électrique 16,
- un deuxième compresseur 17 rotatif motorisé par un moteur 19 accouplé à l'arbre 18 du compresseur,
- un échangeur 20 intermédiaire dont un premier circuit (passe chaude) est interposé entre les sorties des compresseurs 13, 17 et l'entrée de la turbine 15, par l'intermédiaire d'une boucle 21 d'extraction d'eau. Cet échangeur 20 intermédiaire permet de refroidir l'air comprimé délivré par chaque compresseur 13, 17 avant de l'introduire dans la boucle 21 d'extraction d'eau et dans la turbine 15.

Les compresseurs 13, 17 sont alimentés en air en provenance d'une bouche 43 d'entrée d'air ou écope captant l'air extérieur à l'aéronef. Les sorties des deux compresseurs 13, 17 délivrent de l'air comprimé dans des conduites 33, respectivement 37, de sortie qui se rejoignent en un nœud 22 relié par une conduite 23 au premier circuit de l'échangeur 20 intermédiaire.

L'échangeur 20 intermédiaire est interposé dans un canal 25 d'air dynamique présentant une entrée 24 d'air dynamique apte à recevoir un flux d'air à pression dynamique sous l'effet du déplacement de l'aéronef et, à l'opposé de cette entrée 24 d'air dynamique, une sortie 26 d'air dynamique rejetant dans l'atmosphère l'air ayant traversé le canal 25 d'air dynamique. L'entrée 24 d'air dynamique est équipée d'une vanne 27 permettant de régler la section de cette entrée 24 d'air. L'eau extraite dans la boucle 21 d'extraction d'eau est avantageusement injectée dans le canal 25 d'air dynamique par un injecteur 28 à l'amont de l'échangeur 20 intermédiaire, pour augmenter la capacité de refroidissement. L'air circulant dans le canal 25 d'air dynamique traverse un deuxième circuit (passe froide) de l'échangeur 20 intermédiaire.

Une trompe 29 d'injection multiple est placée dans le canal 25 d'air dynamique à l'aval de l'échangeur 20 intermédiaire pour ventiler le canal 25 d'air dynamique lorsque l'aéronef est au sol. Cette trompe 29 d'injection multiple présente, dans l'exemple représenté, deux entrées 34, 38 d'air comprimé. La première entrée 34 d'air comprimé est reliée à la conduite 33 de sortie du premier compresseur 13 par une conduite 35 via une première vanne 36 d'alimentation de la trompe 29 d'injection. La deuxième entrée 38 d'air comprimé est reliée à la conduite 37 de sortie du deuxième compresseur 17 par une conduite 39 via une deuxième vanne 40 d'alimentation de la trompe 29 d'injection. La trompe 29 d'injection est ainsi reliée en parallèle à plusieurs conduites 35, 39 d'alimentation en air comprimé.

En conséquence, lorsque la première vanne 36 est ouverte, la première entrée 34 de la trompe 29 d'injection est alimentée en air comprimé en provenance du premier compresseur 13. De même, lorsque la deuxième vanne 40 est ouverte, la deuxième entrée 38 de la trompe 29 d'injection est alimentée en air comprimé en provenance du deuxième compresseur 17. Ces deux vannes 36, 40 d'alimentation de la trompe 29 d'injection sont des vannes commandées indépendantes et peuvent être commandées indépendamment l'une de l'autre par une unité de commande du dispositif de contrôle environnemental selon l'invention.

La trompe 29 d'injection comprend également une entrée, dite entrée 32 à basse pression, recevant l'air circulant dans le canal 25 d'air dynamique à l'amont de la trompe 29 d'injection, c'est-à-dire à l'aval de l'échangeur 20 intermédiaire.

La première entrée 34 de la trompe 29 d'injection permet d'alimenter au moins une première buse 44 de sortie de la trompe 29 d'injection injectant de l'air comprimé dans le canal 25 d'air dynamique à l'aval de la trompe 29 d'injection, c'est-à-dire en direction de la sortie 26 du canal 25 d'air dynamique. En conséquence, chaque première buse 44 peut être adaptée et optimisée à la pression et au débit de l'air comprimé délivré par le premier compresseur 13, pour permettre la ventilation du canal 25 d'air dynamique, et donc en particulier le fonctionnement de l'échangeur 20 intermédiaire, lorsque l'aéronef est au sol.

La deuxième entrée 38 de la trompe 29 d'injection permet d'alimenter au moins une deuxième buse 48 de sortie de la trompe 29 d'injection injectant de l'air comprimé dans le canal 25 d'air dynamique à l'aval de la trompe 29 d'injection, c'est-à-dire en direction de la sortie 26 du canal 25 d'air dynamique. En conséquence, chaque deuxième buse 48 peut être adaptée et optimisée à la pression et au débit d'air comprimé délivré par le deuxième compresseur 17, pour permettre la ventilation du canal 25 d'air dynamique, et donc en particulier le fonctionnement de l'échangeur 20 intermédiaire, lorsque l'aéronef est au sol.

Ainsi, la trompe 29 d'injection multiple peut être alimentée soit uniquement à partir du premier compresseur 13, soit uniquement à partir du deuxième compresseur 17, soit à partir des deux compresseurs 13, 17, pour ventiler le canal 25 d'air dynamique lorsque l'aéronef est au sol. Dans toutes les conditions d'alimentation de la trompe 29 d'injection, cette dernière présente un fonctionnement optimum, chacune des buses de sortie étant optimisée à l'air qu'elle reçoit. En outre, le canal 25 d'air dynamique peut toujours être ventilé, même en cas de panne ou d'interruption de l'un ou l'autre des compresseurs 13, 17, par exemple en cas de pompage de l'un des compresseurs 13, 17. Il est aussi possible de moduler précisément le fonctionnement de chaque compresseur 13, 17 pour éviter tout phénomène de pompage, tout en préservant la fonction de ventilation du canal d'air dynamique par la la trompe 29 d'injection multiple. Et, en cas de pompage d'un compresseur 13, 17, ce phénomène de pompage n'a en tout état cause aucune répercussion sur l'autre compresseur, la trompe 29 d'injection multiple isolant les deux compresseurs 13, 17 l'un de l'autre.

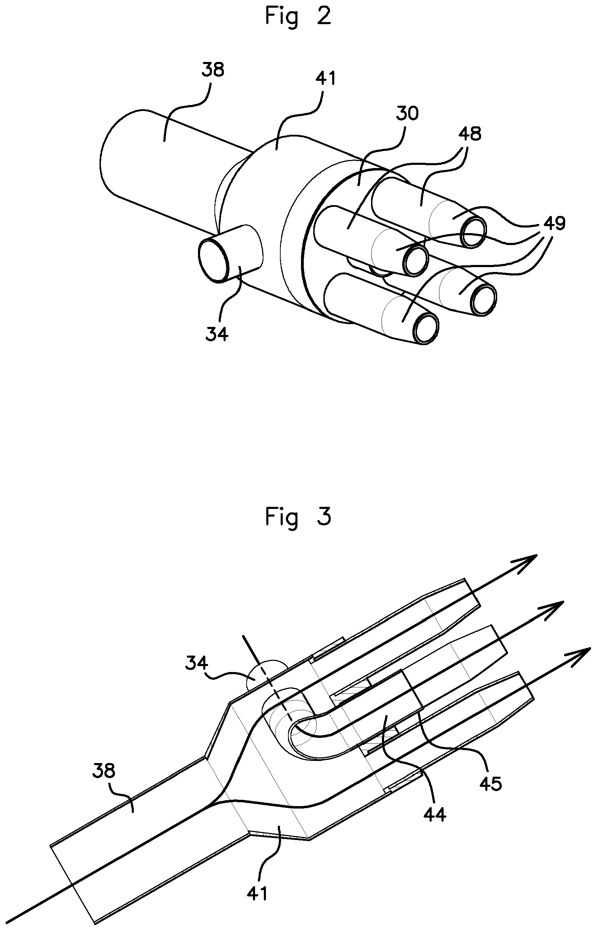

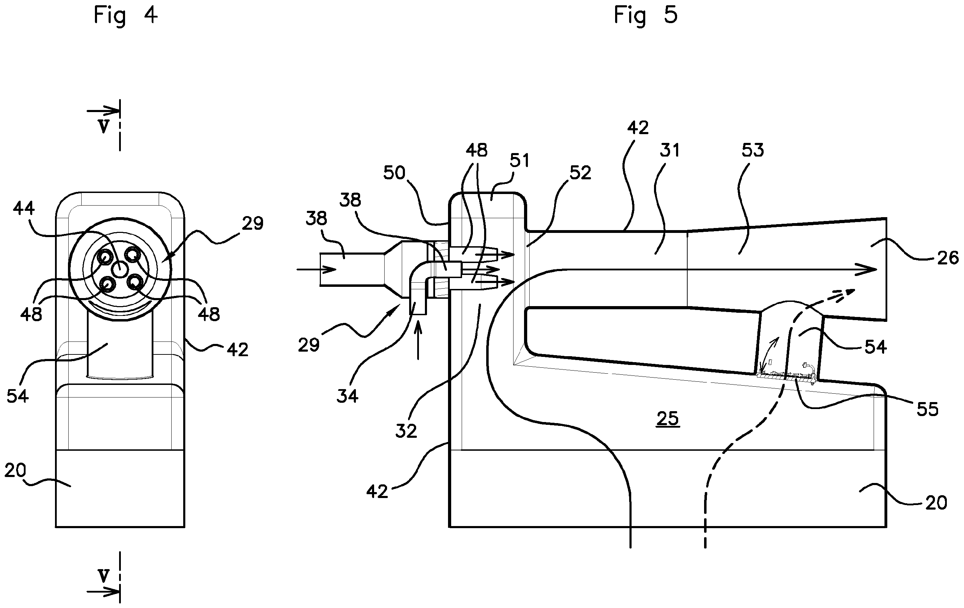

Dans l'exemple de réalisation représenté figures 2 à 5, la trompe 29 d'injection comprend un flasque 30 de montage à l'entrée d'un plenum 31, une première buse 44 centrale injectant de l'air comprimé dans une direction d'injection axiale orthogonale au flasque 30 vers la sortie 26 du canal 25 d'air dynamique, et une série de quatre deuxièmes buses 48 périphériques disposées selon un cercle autour de la première buse 44, les deuxièmes buses 48 injectant de l'air comprimé selon la même direction d'injection axiale.

La première buse 44 est alimentée par la première entrée 34 d'air comprimé formée par un tube coudé relié du côté extérieur au flasque 30 à la première buse 44. Les deuxièmes buses 48 sont alimentées par la deuxième entrée 38 d'air comprimé formée par un tube coudé relié à l'extérieur du flasque 30 par un manchon tronconique 41. Le tube coudé formant la première entrée 34 d'air traverse radialement le manchon tronconique 41 pour être relié à la première buse 44 centrale. Le manchon tronconique 41 est relié aux deuxième buses 48 périphériques pour les alimenter en air comprimé.

De préférence, les deuxièmes buses 48 sont toutes similaires, de mêmes formes et dimensions, et présentent des extrémités axiales 49 situées dans un même plan parallèle au flasque 30, et la première buse 44 centrale présente une extrémité axiale 45 placée entre les deuxièmes buses 48, c'est-à-dire en retrait vers le flasque 30 par rapport aux extrémités axiales 49 des deuxièmes buses 48, la première buse 44 centrale étant de longueur moindre que les deuxièmes buses 48 périphériques. De la sorte le passage de l'air basse pression entre les deuxièmes buses 48 est favorisé, au bénéfice d'un meilleur brassage d'air, en particulier lorsque les deuxièmes buses 48 sont alimentées en air comprimé. et que la première buse 44 centrale ne l'est pas. En effet, en fonctionnement normal, si les contraintes de débit dans le canal d'air dynamique le permettent, on préfère alimenter les deuxièmes buses 48 périphériques plutôt que la première buse 44 centrale pour ventiler le canal d'air dynamique, ces deuxièmes buses 48 périphériques procurant un meilleur brassage et ayant de meilleures performances acoustiques.

La pièce représentée figures 2 et 3 formant les entrées 34, 38 d'air comprimé, le flasque 30 de montage et les buses 44, 48 de sortie de la trompe 29 d'injection peut être en particulier réalisée par toute technique de fabrication par addition de matière, c'est-à-dire par impression tridimensionnelle.

Le plenum 31 s'étend longitudinalement parallèlement à la direction d'injection axiale des buses 44, 48, le flasque 30 étant monté à une extrémité axiale 50 du plenum 31. Le plenum 31 présente un premier tronçon 51 d'entrée formé par la paroi 42 périphérique du canal 25 d'air dynamique, ce premier tronçon 51 s'étendant à partir de l'extrémité 50 axiale portant le flasque 30 et contenant les buses 44, 48. Ce premier tronçon 51 reçoit radialement, c'est-à-dire orthogonalement à la direction d'injection axiale, de l'extérieur vers l'intérieur, l'air circulant dans le canal 25 d'air dynamique à l'aval de l'échangeur 20 intermédiaire, et forme donc une entrée 32 d'air à basse pression de la trompe 29 d'injection. Le plenum 31 présente un col 52 de section droite transversale minimale (considérée sans les buses 44, 48), notamment réduite par rapport à celle du premier tronçon 51. Les différentes buses 44, 48 sont agencées dans le premier tronçon 51 de telle sorte que l'air comprimé délivré par ces buses 44, 48 soit orienté vers le col 52, à l'intérieur de la section de ce dernier. Avantageusement, les extrémités axiales 49 des buses 48 les plus longues sont disposées immédiatement à l'amont du col 52. Le plenum 31 présente, à partir du col 52, un tronçon 53 de sortie divergent faisant office de mélangeur et de diffuseur, dans lequel l'air à basse pression provenant de l'amont du canal 25 d'air dynamique et l'air comprimé délivré par les buses 44, 48, se mélange. Le plenum 31 forme ainsi un tube de Venturi facilitant le mélange des flux et accélérant le flux résultant. L'extrémité axiale du divergent 53 du plenum 31 forme la sortie 26 du canal 25 d'air dynamique.

Le tronçon 53 de sortie du plenum 31 est par ailleurs avantageusement relié par une conduite 54 de contournement au canal 25 d'air dynamique à l'amont de l'entrée 32 d'air à basse pression de la trompe 29 d'injection. Cette conduite 54 de contournement est dotée d'un clapet 55 permettant de fermer la conduite 54 de contournement lorsque de l'air comprimé est alimenté sur l'une au moins des entrées 34, 38 de la trompe 29 d'injection, l'air provenant de l'échangeur 20 intermédiaire dans le canal 25 d'air dynamique passant dans la trompe 29 d'injection ; ou d'ouvrir la conduite 54 de contournement lorsque la trompe 29 d'injection n'est pas alimentée en air comprimé de telle sorte que de l'air arrivant à l'aval de l'échangeur 20 intermédiaire passe directement dans la conduite 54 de contournement vers la sortie 26 du canal 25 d'air dynamique. Il est à noter que lorsque la conduite 54 de contournement est ouverte, une fraction du débit à l'aval de l'échangeur 20 intermédiaire passe malgré tout dans le plenum 31 de la trompe 29 d'injection.

Les essais ont démontré que l'utilisation d'une trompe 29 multiple selon l'invention permet, par rapport à une trompe à une seule buse de l'état de la technique :
- une diminution de 10 % à 20 % de la pression d'injection à l'entrée de la trompe, pour un même débit généré par la trompe ; il en résulte une diminution du niveau acoustique et une diminution de l'énergie consommée ;
- pour un même débit en sortie de la trompe, une augmentation de l'ordre de 20 % du débit massique généré dans le canal d'air dynamique.

L'invention peut faire l'objet de nombreuses variantes de réalisation par rapport aux modes de réalisation décrits ci-dessus et représentés sur les figures. En particulier, la trompe 29 d'injection peut être dotée de plus de deux entrées d'air comprimé, et les buses de sortie peuvent être disposées de toute façon appropriée, en cercles concentriques successifs ou non. Par ailleurs, en général, une seule trompe d'injection dotée de plusieurs entrées d'air comprimé et de plusieurs buses de sortie conformément à l'invention est suffisante pour ventiler un même canal d'air dynamique. Cela étant, rien n'empêche de prévoir plusieurs trompes d'injection dotées chacune de plusieurs entrées et de plusieurs buses de sortie conformément à l'invention dans un même canal d'air dynamique. Rien n'empêche non plus de prévoir plusieurs canaux d'air dynamique pour un même dispositif de contrôle environnemental, et un procédé de ventilation conforme à l'invention de chacun de ces canaux d'air dynamique ou d'une partie seulement d'entre eux. L'invention s'applique également à la ventilation d'un canal d'air dynamique d'un véhicule autre qu'un aéronef, par exemple un train, en particulier un train à grande vitesse.

## Revendications

1. Procédé de ventilation d'un canal (25) d'air dynamique de véhicule, ledit canal (25) d'air dynamique comprenant :
- une entrée (24) d'air dynamique apte à recevoir un flux d'air à pression dynamique sous l'effet d'un déplacement du véhicule,
- au moins un échangeur (20) de chaleur agencé pour pouvoir recevoir au moins une partie dudit flux d'air dynamique,
procédé dans lequel on équipe le canal d'air dynamique d'au moins une trompe (29) d'injection agencée pour pouvoir être alimentée en air comprimé délivré par des sources (13, 17) d'air comprimé du véhicule,
**caractérisé en ce que** la trompe (29) d'injection est une trompe (29) d'injection multiple :
- comprenant une pluralité d'entrées (34, 38) d'air comprimé et une pluralité de buses (44, 48) de sortie d'air comprimé, chaque buse (44, 48) de sortie étant reliée à au moins l'une desdites entrées (34, 38) d'air comprimé,
- dont lesdites entrées (34, 38) d'air comprimé sont reliées à une pluralité de sources (13, 17) d'air comprimé du véhicule,
- dont une première buse (44) de sortie est reliée à au moins une première entrée (34) d'air comprimé reliée à au moins une première source d'air (13) comprimé du véhicule, cette première buse (44) de sortie pouvant recevoir de l'air comprimé délivré par au moins une telle première source (13) d'air comprimé du véhicule,
- dont au moins une buse (48) de sortie, dite deuxième buse (48) de sortie, distincte de ladite première buse (44) de sortie, est :
∘ isolée de chaque première entrée (34) d'air comprimé,
∘ reliée à au moins une entrée, dite deuxième entrée (38) d'air comprimé :
▪ cette deuxième entrée (38) d'air comprimé étant distincte de chaque première entrée (34) d'air comprimé,
▪ et étant reliée à au moins une source d'air comprimé du véhicule, dite deuxième source d'air (17) comprimé, distincte de chaque première source d'air (13) comprimé,
chaque deuxième buse (48) de sortie pouvant recevoir de l'air comprimé délivré par au moins une telle deuxième source (17) d'air comprimé, sans pouvoir recevoir de l'air comprimé délivré par toute première source d'air (13) comprimé.

2. Procédé selon la revendication 1 **caractérisé en ce que** chaque buse (44, 48) de sortie d'une trompe (29) d'injection multiple est reliée à une unique entrée (34, 38) d'air comprimé de cette trompe (29) d'injection multiple et **en ce que** chaque entrée (34, 38) d'air comprimé de cette trompe (29) d'injection multiple est reliée à une unique source d'air (13, 17) comprimé du véhicule, chaque buse (44, 48) de sortie de cette trompe (29) d'injection multiple pouvant uniquement recevoir de l'air comprimé délivré par une unique source (13, 17) d'air comprimé du véhicule.

3. Procédé selon l'une quelconque des revendications 1 ou 2 **caractérisé en ce que** chaque source d'air (13, 17) comprimé du véhicule est reliée à une unique entrée (34, 38) d'air comprimé d'une trompe (29) d'injection multiple.

4. Procédé selon l'une quelconque des revendications 1 à 3 **caractérisé en ce qu'**au moins un compresseur rotatif d'un dispositif de contrôle environnemental d'au moins une cabine du véhicule est relié à au moins une entrée d'une trompe (29) d'injection multiple.

5. Dispositif de contrôle environnemental d'au moins une cabine (11) de véhicule comprenant :
- une pluralité de sources (13, 17) d'air comprimé,
- au moins un canal (25) d'air dynamique comprenant :
∘ une entrée (24) d'air dynamique apte à recevoir un flux d'air à pression dynamique sous l'effet d'un déplacement du véhicule,
∘ au moins un échangeur (20) de chaleur agencé pour pouvoir recevoir au moins une partie dudit flux d'air dynamique,
∘ au moins une trompe (29) d'injection agencée pour pouvoir être alimentée en air comprimé délivré par au moins une partie desdites sources d'air comprimé,
**caractérisé en ce que** la trompe (29) d'injection est une trompe (29) d'injection multiple :
- comprenant une pluralité d'entrées (34, 38) d'air comprimé et une pluralité de buses (44, 48) de sortie d'air comprimé, chaque buse (44, 48) de sortie étant reliée à au moins l'une desdites entrées (34, 38) d'air comprimé,
- dont lesdites entrées (34, 38) d'air comprimé sont reliées à une pluralité desdites sources (13, 17) d'air comprimé,
- dont une première buse (44) de sortie est reliée à au moins une première entrée (34) d'air comprimé reliée à au moins une première source d'air (13) comprimé, cette première buse (44) de sortie pouvant recevoir de l'air comprimé délivré par au moins une telle première source (13) d'air comprimé,
- dont au moins une buse (48) de sortie, dite deuxième buse (48) de sortie, distincte de ladite première buse (44) de sortie, est :
∘ isolée de chaque première entrée (34) d'air comprimé,
∘ reliée à au moins une entrée, dite deuxième entrée (38) d'air comprimé :
▪ cette deuxième entrée (38) d'air comprimé étant distincte de chaque première entrée (34) d'air comprimé,
▪ et étant reliée à au moins une source d'air comprimé, dite deuxième source d'air (17) comprimé, distincte de chaque première source d'air (13) comprimé,
chaque deuxième buse (48) de sortie pouvant recevoir de l'air comprimé délivré par au moins une telle deuxième source (17) d'air comprimé, sans pouvoir recevoir de l'air comprimé délivré par toute première source d'air (13) comprimé.

6. Dispositif selon la revendication 5 **caractérisé en ce que** chaque buse (44, 48) de sortie d'une trompe (29) d'injection multiple est reliée à une unique entrée (34, 38) d'air comprimé de cette trompe (29) d'injection multiple et **en ce que** chaque entrée (34, 38) d'air comprimé de cette trompe (29) d'injection multiple est reliée à une unique source d'air (13, 17) comprimé du véhicule, chaque buse (44, 48) de sortie de cette trompe (29) d'injection multiple pouvant uniquement recevoir de l'air comprimé délivré par une unique source (13, 17) d'air comprimé du véhicule.

7. Dispositif selon l'une quelconque des revendications 5 ou 6 **caractérisé en ce que** chaque source d'air (13, 17) comprimé du véhicule est reliée à une unique entrée (34, 38) d'air comprimé d'une trompe (29) d'injection multiple.

8. Dispositif selon l'une des revendications 5 à 7 **caractérisé en ce que** l'une au moins desdites première et deuxième sources d'air (13, 17) comprimé est un compresseur rotatif.

9. Dispositif selon l'une des revendications 5 à 8 **caractérisé en ce qu'**au moins une trompe (29) d'injection multiple présente au moins une première buse (44) de sortie centrale reliée à ladite première entrée (34) d'air comprimé et au moins une série de deuxièmes buses (48) de sortie périphériques reliées à une deuxième entrée (38) d'air comprimé et s'étendant autour de chaque première buse (44) de sortie centrale.

10. Dispositif selon l'une des revendications 5 à 9 **caractérisé en ce que** chaque trompe (29) d'injection multiple comprend :
- un plenum (31) de sortie agencé pour pouvoir recevoir l'air comprimé délivré par chaque buse (44, 48) de sortie,
- une entrée d'air, dite entrée (32) d'air à basse pression, agencée pour recevoir de l'air en provenance de l'entrée (24) d'air dynamique du canal (25) d'air dynamique et le faire circuler dans ledit plenum (31),
lesdites buses (44, 48) de sortie et ladite entrée (32) d'air à basse pression étant agencées de façon à ce que l'air comprimé issu de l'une quelconque des buses (44, 48) de sortie puisse se mélanger dans ledit plenum (31) à l'air délivré par ladite entrée (32) d'air basse pression en formant un flux d'air de mélange entraînant une ventilation du canal (25) d'air dynamique.

11. Dispositif selon la revendication 10 **caractérisé en ce que** ladite entrée (32) d'air à basse pression est une entrée d'air radiale aux buses (44, 48) de sortie de la trompe (29) d'injection multiple.

12. Dispositif selon l'une quelconque des revendications 10 ou 11 **caractérisé en ce que** le canal (25) d'air dynamique est doté d'une conduite (54) de contournement de ladite trompe (29) d'injection, cette conduite (54) de contournement reliant audit plenum (31) une zone du canal (25) d'air dynamique à l'amont de ladite entrée (32) d'air à basse pression.

13. Dispositif selon la revendication 12 **caractérisé en ce que** ladite conduite (54) de contournement est dotée d'un clapet (55) adapté pour :
- permettre une circulation d'air dans la conduite (54) de contournement lorsqu'aucune des entrées (34, 38) d'air comprimé n'est alimentée en air comprimé,
- permettre une circulation d'air dans l'entrée (32) d'air à basse pression de la trompe (29) d'injection lorsque l'une au moins des entrées (34, 38) d'air comprimé est alimentée en air comprimé.

14. Dispositif selon l'une des revendications 10 à 13 **caractérisé en ce que** ledit plenum (31) communique avec une sortie (26) d'air du canal d'air dynamique vers l'atmosphère extérieure au véhicule.

15. Véhicule -notamment aéronef- **caractérisé en ce qu'**il comprend au moins un dispositif de contrôle environnemental selon l'une des revendications 5 à 14.

## Patentansprüche

1. Ventilationsverfahren einer dynamischen Luftleitung (25) eines Fahrzeugs, wobei die dynamische Luftleitung (25) Folgendes umfasst:
- einen dynamischen Lufteintritt (24), der imstande ist, einen Luftstrom unter dynamischem Druck unter der Wirkung einer Fahrt des Fahrzeugs aufzunehmen,
- mindestens einen Wärmetauscher (20), der angeordnet ist, um mindestens einen Teil des dynamischen Luftstroms aufzunehmen,
Verfahren, bei dem man die dynamische Luftleitung mit mindestens einem Injektionsrüssel (29) ausrüstet, der angeordnet ist, um mit Druckluft versorgt zu werden, die durch Druckluftquellen (13, 17) des Fahrzeugs abgegeben wird,
**dadurch gekennzeichnet, dass** der Injektionsrüssel (29) ein Mehrfach-Injektionsrüssel (29) ist:
- umfassend eine Vielzahl von Drucklufteintritten (34, 38) und eine Vielzahl von Druckluftaustrittsdüsen (44, 48), wobei jede Austrittsdüse (44, 48) mit mindestens einem der Drucklufteintritte (34, 38) verbunden ist,
- dessen Drucklufteintritte (34, 38) mit einer Vielzahl von Druckluftquellen (13, 17) des Fahrzeugs verbunden sind,
- von dem eine erste Austrittsdüse (44) mit mindestens einem ersten Drucklufteintritt (34) verbunden ist, der mit mindestens einer ersten Druckluftquelle (13) des Fahrzeugs verbunden ist, wobei diese erste Austrittsdüse (44) Druckluft aufnehmen kann, die durch mindestens eine solche erste Druckluftquelle (13) des Fahrzeugs abgegeben wird,
- von dem sich mindestens eine Austrittsdüse (48), die zweite Austrittsdüse (48) genannt wird, die sich von der ersten Austrittsdüse (44) unterscheidet, wie folgt ist:
° von jedem ersten Drucklufteintritt (34) isoliert,
° mit mindestens einem Eintritt, der zweiter Drucklufteintritt (38) genannt wird, verbunden:
• wobei sich dieser zweite Druklufteintritt (38) von jedem ersten Drucklufteintritt (34) unterscheidet,
• und mit mindestens einer Druckluftquelle des Fahrzeugs, die zweite Druckluftquelle (17) genannt wird, verbunden ist, die sich von jeder ersten Druckluftquelle (13) unterscheidet,
wobei jede zweite Austrittsdüse (48) Druckluft aufnehmen kann, die durch mindestens eine solche zweite Druckluftquelle (17) abgegeben wird, ohne Druckluft aufnehmen zu können, die durch jede erste Druckluftquelle (13) abgegeben wird.

2. Verfahren nach Anspruch 1, **dadurch gekennzeichnet, dass** jede Austrittsdüse (44, 48) eines Mehrfach-Injektionsrüssels (29) mit einem einzigen Drucklufteintritt (34, 38) dieses Mehrfach-Injektionsrüssels (29) verbunden ist, und dadurch, dass jeder Drucklufteintritt (34, 38) dieses Mehrfach-Injektionsrüssels (29) mit einer einzigen Druckluftquelle (13, 17) des Fahrzeugs verbunden ist, wobei jede Austrittsdüse (44, 48) dieses Mehrfach-Injektionsrüssels (29) nur Druckluft aufnehmen kann, die durch eine einzige Druckluftquelle (13, 17) des Fahrzeugs abgegeben wird.

3. Verfahren nach einem der Ansprüche 1 oder 2, **dadurch gekennzeichnet, dass** jede Druckluftquelle (13, 17) des Fahrzeugs mit einem einzigen Drucklufteintritt (34, 38) eines Mehrfach-Injektionsrüssels (29) verbunden ist.

4. Verfahren nach einem der Ansprüche 1 bis 3, **dadurch gekennzeichnet, dass** mindestens ein Drehkompressor einer Umweltkontrollvorrichtung mindestens einer Kabine des Fahrzeugs mit mindestens einem Eintritt eines Mehrfach-Injektionsrüssels (29) verbunden ist.

5. Umweltkontrollvorrichtung mindestens einer Kabine (11) eines Fahrzeugs, Folgendes umfassend:
- eine Vielzahl von Druckluftquellen (13, 17),
- mindestens eine dynamische Luftleitung (25), Folgendes umfassend:
° einen dynamischen Lufteintritt (24), der imstande ist, einen Luftstrom unter dynamischem Druck unter der Wirkung einer Fahrt des Fahrzeugs aufzunehmen,
° mindestens einen Wärmetauscher (20), der angeordnet ist, um mindestens einen Teil des dynamischen Luftstroms aufzunehmen,
° mindestens einen Injektionsrüssel (29), der angeordnet ist, um mit Druckluft versorgt werden zu können, die durch mindestens einen Teil der Druckluftquellen abgegeben wird,
**dadurch gekennzeichnet, dass** der Injektionsrüssel (29) ein Mehrfach-Injektionsrüssel (29) ist:
- umfassend eine Vielzahl von Drucklufteintritten (34, 38) und eine Vielzahl von Druckluftaustrittsdüsen (44, 48), wobei jede Austrittsdüse (44, 48) mit mindestens einem der Drucklufteintritte (34, 38) verbunden ist,
- dessen Drucklufteintritte (34, 38) mit einer Vielzahl der Druckluftquellen (13, 17) verbunden sind,
- von dem eine erste Austrittsdüse (44) mit mindestens einem ersten Drucklufteintritt (34) verbunden ist, der mit mindestens einer ersten Druckluftquelle (13) verbunden ist, wobei diese erste Austrittsdüse (44) Druckluft aufnehmen kann, die durch mindestens eine solche erste Druckluftquelle (13) abgegeben wird,
- von dem sich mindestens eine Austrittsdüse (48), die zweite Austrittsdüse (48) genannt wird, die sich von der ersten Austrittsdüse (44) unterscheidet, wie folgt ist:
° von jedem ersten Drucklufteintritt (34) isoliert,
° mit mindestens einem Eintritt, der zweiter Drucklufteintritt (38) genannt wird, verbunden:
• wobei sich dieser zweite Druklufteintritt (38) von jedem ersten Drucklufteintritt (34) unterscheidet,
• und mit mindestens einer Druckluftquelle, die zweite Druckluftquelle (17) genannt wird, verbunden ist, die sich von jeder ersten Druckluftquelle (13) unterscheidet,
wobei jede zweite Austrittsdüse (48) Druckluft aufnehmen kann, die durch mindestens eine solche zweite Druckluftquelle (17) abgegeben wird, ohne Druckluft aufnehmen zu können, die durch jede erste Druckluftquelle (13) abgegeben wird.

6. Vorrichtung nach Anspruch 5, **dadurch gekennzeichnet, dass** jede Austrittsdüse (44, 48) eines Mehrfach-Injektionsrüssels (29) mit einem einzigen Drucklufteintritt (34, 38) dieses Mehrfach-Injektionsrüssels (29) verbunden ist, und dadurch, dass jeder Drucklufteintritt (34, 38) dieses Mehrfach-Injektionsrüssels (29) mit einer einzigen Druckluftquelle (13, 17) des Fahrzeugs verbunden ist, wobei jede Austrittsdüse (44, 48) dieses Mehrfach-Injektionsrüssels (29) nur Druckluft aufnehmen kann, die durch eine einzige Druckluftquelle (13, 17) des Fahrzeugs abgegeben wird.

7. Vorrichtung nach einem der Ansprüche 5 oder 6, **dadurch gekennzeichnet, dass** jede Druckluftquelle (13, 17) des Fahrzeugs mit einem einzigen Drucklufteintritt (34, 38) eines Mehrfach-Injektionsrüssels (29) verbunden ist.

8. Vorrichtung nach einem der Ansprüche 5 bis 7, **dadurch gekennzeichnet, dass** mindestens eine der ersten und zweiten Druckluftquelle (13, 17) ein Drehkompressor ist.

9. Vorrichtung nach einem der Ansprüche 5 bis 8, **dadurch gekennzeichnet, dass** mindestens ein Mehrfach-Injektionsrüssel (29) mindestens eine erste zentrale Austrittsdüse (44) aufweist, die mit dem ersten Drucklufteintritt (34) verbunden ist, und mindestens eine Reihe von zweiten peripheren Austrittsdüsen (48), die mit einem zweiten Drucklufteintritt (38) verbunden sind, und sich um jede erste zentrale Austrittsdüse (44) erstrecken.

10. Vorrichtung nach einem der Ansprüche 5 bis 9, **dadurch gekennzeichnet, dass** jeder Mehrfach-Injektionsrüssel (29) umfasst:
- ein Austrittsplenum (31), das angeordnet ist, um die Druckluft aufnehmen zu können, die von jeder Austrittsdüse (44, 48) abgegeben wird,
- einen Lufteintritt, der Niederdrucklufteintritt (32) genannt wird, der angeordnet ist, um Luft aus dem dynamischen Lufteintritt (24) der dynamischen Luftleitung (25) aufzunehmen, und sie in dem Plenum (31) zirkulieren zu lassen,
wobei die Austrittsdüsen (44, 48) und der Niederdrucklufteintritt (32) derart angeordnet sind, dass sich die Druckluft, die aus irgendeiner der Austrittssüden (44, 48) stammt, in dem Plenum (31) mit der Luft vermischen kann, die durch den Niederdrucklufteintritt (32) abgegeben wird, indem ein Mischluftstrom gebildet wird, der eine Ventilation der dynamischen Luftleitung (25) antreibt.

11. Vorrichtung nach Anspruch 10, **dadurch gekennzeichnet, dass** der Niederdrucklufteintritt (32) ein zu den Austrittsdüsen (44, 48) des Mehrfach-Injektionsrüssels (29) radialer Lufteintritt ist.

12. Vorrichtung nach einem der Ansprüche 10 oder 11, **dadurch gekennzeichnet, dass** die dynamische Luftleitung (25) mit einem Umgehungskanal (54) des Injektionsrüssels (29) versehen ist, wobei dieser Umgehungskanal (54) eine Zone der dynamischen Luftleitung (25) stromaufwärts des Niederdrucklufteintritts (32) mit dem Plenum (31) verbindet.

13. Vorrichtung nach Anspruch 12, **dadurch gekennzeichnet, dass** der Umgehungskanal (54) mit einer Klappe (55) versehen ist, die angepasst ist, um:
- eine Luftzirkulation in dem Umgehungskanal (54) zu erlauben, wenn keiner der Drucklufteintritte (34, 38) mit Druckluft versorgt ist,
- eine Luftzirkulation in dem Niederdrucklufteintritt (32) des Injektionsrüssels (29) zu erlauben, wenn mindestens einer der Drucklufteintritte (34, 38) mit Druckluft versorgt ist.

14. Vorrichtung nach einem der Ansprüche 10 bis 13, **dadurch gekennzeichnet, dass** das Plenum (31) mit einem Luftaustritt (26) der dynamischen Luftleitung zur Atmosphäre außerhalb des Fahrzeugs kommuniziert.

15. Fahrzeug - insbesondere ein Luftfahrzeug - **dadurch gekennzeichnet, dass** es mindestens eine Umweltkontrollvorrichtung nach einem der Ansprüche 5 bis 14 umfasst.

## Claims

1. Method for ventilating a ram air channel (25) for a vehicle, said ram air channel (25) comprising:
- a ram air inlet (24) capable of receiving an air flow at ram air pressure under the effect of a movement of the vehicle,
- at least one heat exchanger (20) arranged to be able to receive at least one portion of said ram air flow,
method in which the ram air channel is provided with at least one jet pump (29) arranged to be able to be fed with compressed air delivered by compressed air sources (13, 17) of the vehicle,
**characterised in that** the jet pump (29) is a multiple-jet pump (29):
- comprising a plurality of compressed air inlets (34, 38) and a plurality of compressed air outlet nozzles (44, 48), each nozzle (44, 48) being connected to at least one of said compressed air inlets (34, 38),
- of which said compressed air inlets (34, 38) are connected to a plurality of compressed air sources (13, 17) of the vehicle,
- of which a first nozzle (44) is connected to at least one first compressed air inlet (34) connected to at least one first compressed air source (13) of the vehicle, this first nozzle (44) being able to receive compressed air delivered by at least one such first compressed air source (13) of the vehicle,
- of which at least one nozzle (48), named second nozzle (48), separate from said first nozzle (44) is:
∘ isolated from each first compressed air inlet (34),
∘ connected to at least one inlet, named second compressed air inlet (38):
▪ separate from each first compressed air inlet (34),
▪ and connected to at least one compressed air source of the vehicle, named second compressed air source (17), separate from each first compressed air source (13),
each second nozzle (48) being able to receive compressed air delivered by at least one such second compressed air source (17) without being able to receive compressed air delivered by any first compressed air source (13).

2. Method according to claim 1, **characterised in that** each nozzle (44, 48) of a multiple-jet pump (29) is connected to a single compressed air inlet (34, 38) of this multiple-jet pump (29), and **in that** each compressed air inlet (34, 38) of this multiple-jet pump (29) is connected to a single compressed air source (13, 17) of the vehicle, each nozzle (44, 48) of this multiple-jet pump (29) being able to receive only compressed air delivered by a single compressed air source (13, 17) of the vehicle.

3. Method according to any one of claims 1 or 2, **characterised in that** each compressed air source (13, 17) of the vehicle is connected to a single compressed air inlet (34, 38) of a multiple-jet pump (29).

4. Method according to any one of claims 1 to 3, **characterised in that** at least one rotary compressor of an environmental control device of at least one cabin of the vehicle is connected to at least one inlet of a multiple-jet pump (29).

5. Environmental control device for at least one vehicle cabin (11), comprising:
- a plurality of compressed air sources (13, 17),
- at least one ram air channel (25), comprising:
∘ a ram air inlet (24) capable of receiving an air flow at ram air pressure under the effect of a movement of the vehicle,
∘ at least one heat exchanger (20) arranged to be able to receive at least one portion of said ram air flow,
∘ at least one jet pump (29) arranged to be able to be fed with compressed air delivered by at least some of said compressed air sources, **characterised in that** the jet pump (29) is a multiple-jet pump (29):
- comprising a plurality of compressed air inlets (34, 38) and a plurality of compressed air outlet nozzles (44, 48), each nozzle (44, 48) being connected to at least one of said compressed air inlets (34, 38),
- of which said compressed air inlets (34, 38) are connected to a plurality of said compressed air sources (13, 17),
- of which a first nozzle (44) is connected to at least one first compressed air inlet (34) connected to at least one first compressed air source (13), this first nozzle (44) being able to receive compressed air delivered by at least one such first compressed air source (13),
- of which at least one nozzle (48), named second nozzle (48), separate from said first nozzle (44) is:
∘ isolated from each first compressed air inlet (34),
∘ connected to at least one inlet, named second compressed air inlet (38):
▪ separate from each first compressed air inlet (34),
▪ and connected to at least one compressed air source, named second compressed air source (17), separate from each first compressed air source (13), each second nozzle (48) being able to receive compressed air delivered by at least one such second compressed air source (17) without being able to receive compressed air delivered by any first compressed air source (13).

6. Device according to claim 5, **characterised in that** each nozzle (44, 48) of a multiple-jet pump (29) is connected to a single compressed air inlet (34, 38) of this multiple-jet pump (29), and **in that** each compressed air inlet (34, 38) of this multiple-jet pump (29) is connected to a single compressed air source (13, 17) of the vehicle, each nozzle (44, 48) of this multiple-jet pump (29) being able to receive only compressed air delivered by a single compressed air source (13, 17) of the vehicle.

7. Device according to any one of claims 5 or 6, **characterised in that** each compressed air source (13, 17) of the vehicle is connected to a single compressed air inlet (34, 38) of a multiple-jet pump (29).

8. Device according to any one of claims 5 to 7, **characterised in that** at least one of said first and second compressed air sources (13, 17) is a rotary compressor.

9. Device according to any one of claims 5 to 8, **characterised in that** at least one multiple-jet pump (29) has at least one first central nozzle (44) connected to said first compressed air inlet (34) and at least one series of second peripheral nozzles (48) connected to a second compressed air inlet (38) and extending around each first central nozzle (44).

10. Device according to any one of claims 5 to 9, **characterised in that** each multiple-jet pump (29) comprises:
- an outlet plenum (31) arranged to be able to receive the compressed air delivered by each nozzle (44, 48),
- an air inlet, named low-pressure air inlet (32), arranged to receive air from the ram air inlet (24) of the ram air channel (25) and to cause said air to circulate in said plenum (31),
said nozzles (44, 48) and said low-pressure air inlet (32) being arranged such that the compressed air from any one of the nozzles (44, 48) can mix in said plenum (31) with the air delivered by said low-pressure air inlet (32), forming a combination flow of air causing ventilation of the ram air channel (25).

11. Device according to claim 10, **characterised in that** said low-pressure air inlet (32) is a radial air inlet to the nozzles (44, 48) of the multiple-jet pump (29).

12. Device according to any one of claims 10 or 11, **characterised in that** the ram air channel (25) is provided with a duct (54) for bypassing said jet pump (29), this bypass duct (54) connecting a zone of the ram air channel (25) upstream of said low-pressure air inlet (32) to said plenum (31).

13. Device according to claim 12, **characterised in that** said bypass duct (54) is provided with a valve (55) adapted to:
- allow a circulation of air in the bypass duct (54) when no compressed air inlets (34, 38) are fed with compressed air,
- allow a circulation of air in the low-pressure air inlet (32) of the jet pump (29) when at least one of the compressed air inlets (34, 38) is fed with compressed air.

14. Device according to any one of claims 10 to 13, **characterised in that** said plenum (31) communicates with an air outlet (26) of the ram air channel to the atmosphere outside of the vehicle.

15. Vehicle - in particular an aircraft - **characterised in that** it comprises at least one environmental control device according to any one of claims 5 to 14.
